# EUROPEAN PATENT SPECIFICATION

(11) **EP 3 450 309 B1**
(45) Date of publication and mention of the grant of the patent: **23.10.2024**
(21) Application number: 18191033.2
(22) Date of filing: 27.08.2018
(51) Int. Cl.: B64U 20/40, B64C 37/02, B64D 1/02, B64G 1/64, B64G 1/22

(54) **A COUPLING DEVICE FOR COUPLING MODULES WITH EACH OTHER, AIRCRAFT COMPRISING THE COUPLING DEVICE, METHOD FOR THE COUPLING AND DECOUPLING OF MODULES**
KOPPLUNGSVORRICHTUNG ZUM KOPPELN VON MODULEN MITEINANDER, FLUGZEUG MIT DER KOPPLUNGSVORRICHTUNG, VERFAHREN ZUM KOPPELN UND ENTKOPPELN VON MODULEN
DISPOSITIF DE COUPLAGE PERMETTANT DE COUPLER DES MODULES LES UNS AVEC LES AUTRES, AÉRONEF COMPRENANT LE DISPOSITIF DE COUPLAGE, PROCÉDÉ POUR LE COUPLAGE ET LE DÉCOUPLAGE DE MODULES

(30) Priority: 28.08.2017 DE 102017119670
(43) Date of publication of application: 06.03.2019
(73) Proprietor: Airbus Operations GmbH, 21129 Hamburg (DE)
(72) Inventor: Schäfer, Bastian, 21129 Hamburg (DE); Benthien, Hermann, 21129 Hamburg (DE); Kaden, David, 21129 Hamburg (DE); Dicks, Danny, 21129 Hamburg (DE)
(74) Representative: KASTEL Patentanwälte PartG mbB

(56) References cited:
- WO-A1-2016/027942
- WO-A1-2016/134193
- CN-A- 102 556 341
- CN-A- 106 005 361
- CN-A- 106 741 945
- CN-A- 106 794 895
- CN-A- 107 089 349
- KR-A- 20160 031 602
- US-A- 3 178 669
- US-A- 4 500 057
- US-A- 4 836 081
- US-A- 5 046 395
- US-A- 6 030 244
- US-B1- 6 354 540

## Description

### Field of the invention

The invention relates to a coupling device for coupling modules with each other, an aircraft comprising such a coupling device, and to a method for the coupling and decoupling of modules.

### Background of the Invention

Unmanned aerial vehicles, so-called drones, are known from the prior art. Several of these drones may be mechanically coupled to one another as respective modules in order to form a drone assembly, or even a so-called drone swarm.

Thus, DE102013000409, for example, discloses an airborne platform consisting of different individual modules. This airborne platform is capable of taking off and landing vertically and of flying autonomously. Here, the airborne platform includes at least one drive and control module as well as further modules that can be coupled to the drive and control module depending on the purpose of the airborne platform. In this case, each module includes a mechanical as well as, preferably, also an electrical interface via which the drive and control module can be assembled directly or indirectly for forming the airborne platform.

Further coupling devices and respective platforms are known from US6 354 540 B1, CN 107 089 349 A, US 4 836 081 A, US 5 046 395 A, US 4 500 057 A, CN 106 741 945 A, KR 2016 0031602 A, US 6 030 244 A, CN 106 005 361 A, CN 106 794 895 A, WO 2016/134193 A1, CN 102556 341 A, WO 2016/027942 A1 and US 3 178 669 A.

### Description of the invention

The object on which the invention is based is to provide a coupling device which enables two or more modules to be coupled with each other as easily and reliably as possible.

The object is achieved with the features of the independent claims. Advantageous embodiments of the invention are specified in the dependent claims.

According to a first aspect, the invention is characterized by a coupling device for coupling modules with each other. The coupling device comprises a coupling surface, a primary coupling member and at least two secondary coupling members. The primary coupling member is disposed on the coupling surface. A coupling axis disposed parallel to the coupling surface and, in use, parallel to a direction of action of earth's gravitational acceleration extends through the primary coupling member. The at least two secondary coupling members are disposed on the coupling surface, and respectively have a predetermined distance from the coupling axis. The primary coupling member is configured in an androgynous manner. The two secondary coupling members form a secondary complementary coupling pair, in which a first secondary coupling member is formed to be complementary to a second secondary coupling member of another coupling module, for coupling of two modules respectively comprising the coupling device. A first selection of the secondary coupling members is disposed on one side of the coupling axis and a second selection of the secondary coupling members is disposed on the other side of the coupling axis. At least one of the secondary coupling members is configured to attract, in a first control mode, another secondary coupling member formed so as to be complementary thereto, or to repel it in a second control mode.

Each module to be coupled comprises at least one coupling device, whereby a reliable coupling to at least one further module can be made possible. One module may also comprise several of these coupling devices and thus be coupled to more than one further module. A module may be configured, for example, as an aircraft such as a drone.

The respective coupling surface of a coupling device forms a planar surface, for example, which is divided by the coupling axis into two partial surfaces. At the same time, the coupling surface may be a face or surface of the module on which both the primary and the at least two secondary coupling members are arranged. Here, however, the coupling surface may only take up a part of the corresponding module surface or face.

The coupling axis is disposed parallel to the coupling surface. The coupling axis extends parallel to a direction of action of earth's gravitational acceleration. In other words, the coupling axis extends parallel to an applicate axis. The term applicate axis is in this context to be understood to mean a third axis in space, which is often also referred to as the Z-axis in a Cartesian coordinate system. The applicate axis differs from a vehicle-bound yaw or vertical axis in that it is independent of the vehicle or module and is also orientated parallel to a direction of action of earth's gravitational acceleration.

The at least two secondary coupling members are formed so as to be complementary to each other. This means that a secondary coupling member has a coupling profile configured to be complementary to the coupling profile of the other secondary coupling member. Preferably, a secondary coupling member is configured as a mandrel and the other secondary coupling member configured to be complementary thereto as a bushing into which the mandrel fits. However, other complementary coupling profiles for the secondary coupling member can be used in principle.

Two complementarily configured secondary coupling members form a so-called complementary coupling pair, wherein the one secondary coupling member is preferably disposed on one side relative to the coupling axis and the other secondary coupling member is preferably disposed on the other side relative to the coupling axis at the respective predetermined distance. Here, it is required that the coupling axis does not extend through any of the secondary coupling member, or that none of the secondary coupling members be disposed on the coupling axis.

Here, the first selection includes exactly as many secondary coupling members as the second selection. Preferably, a secondary coupling member of the first selection thus forms a complementary coupling pair with the associated secondary coupling member of the second selection. A particularly reliable coupling of the modules can thus be obtained.

The primary coupling member forms the main component for coupling the modules with each other. The secondary coupling members mainly serve for the modules to be coupled to become aligned with and attract each other, so that a reliable coupling is possible by means of the primary coupling member. Here, the primary coupling member forms a so-called reference point for the coupling device, around which the secondary coupling members are arranged. An androgynously configured primary coupling member makes it possible to couple all modules with each other which respectively have the coupling device with the androgynous primary coupling member.

If two modules are coupled which respectively comprise the coupling device, the respectively assigned coupling faces oppose each other. And thus, complementary and thus mutually fitting secondary coupling members oppose each other in each case. If complementarily formed secondary coupling members are disposed with a predetermined distance from the coupling axis, a coupling with modules including identical coupling devices does not absolutely require the secondary coupling members to be configured in an androgynous manner. The androgynously formed primary coupling member intersects the coupling axis on the coupling face.

In another advantageous embodiment of the first aspect, at least one secondary coupling member of the first selection comprises at least one electromagnet.

In another advantageous embodiment of the first aspect, at least one secondary coupling member of the second selection comprises at least one permanent magnet.

This means that a member of the respective complementary coupling pair is controllable, whereas the other member is not controllable and thus cannot be turned on or off. The non-controllable member is preferably configured to be passive and preferably includes a permanent magnet. Here, the controllable secondary coupling member can be controlled in such a way, in accordance with the first control, that is attracts an opposite, non-controllable, secondary coupling member. This may aid an alignment of two modules to be coupled prior to the coupling with the primary coupling members. Alternatively, after the primary coupling members have been separated or decoupled, the controllable secondary coupling member can be controlled in such a way, in accordance with the second control, that the modules to be separated repel each other in order to obtain a safe distance relative to each other, in order then to be operated independently of each other.

In another advantageous embodiment of the first aspect, the primary coupling member is configured to substantially absorb forces in a first direction of action. The secondary coupling members are configured to absorb forces in a second direction of action. Here, the first direction of action differs from the second direction of action. Here, the primary coupling member is capable preferably of absorbing forces in the direction of tension and compression relative to a predetermined direction of movement of the modules to be coupled, whereas the secondary coupling members absorb forces in the transverse direction.

Here, the primary coupling member may additionally be configured to absorb forces in the transverse direction in addition to the tensile and compressive forces. In contrast, the secondary coupling members are preferably configured to absorb only forces in one direction, e.g. the transverse direction.

Furthermore, the coupling axis may be offset from a center plane, which preferably passes through the primary coupling member, of the coupling surface.

In another aspect, the invention provides a coupling arrangement for coupling modules with each other, the coupling arrangement comprising a plurality of coupling devices according to the first aspect, wherein, when the coupling devices are coupled to each other, their respective primary and secondary coupling members are in engagement with each other so as to prevent decoupling.

Preferably, the coupling devices are configured such that, when the coupling devices are coupled to each other, a first coupling axis of a first coupling device and a second coupling axis of a second coupling device are offset along a direction which is parallel to the coupling surface and is orthogonal to the respective coupling axis.

It may be remarked in this context that, even after a deactivation of the control of the corresponding secondary coupling members, they continue to interlock in a complementary manner in a state of being coupled with another module, and thus continue to absorb forces in the predetermined direction. Even after deactivation of the control, the secondary coupling members, in the coupled state, continue to contribute to coupling the modules with each other. In summary, this means that the secondary coupling members are configured to absorb forces in the second direction of action if the control is deactivated.

According to a second aspect, the invention is characterized by a method for coupling two modules with each other. Each module has a coupling device according to the first aspect. Here, a distance of the two modules relative to each other is detected and, depending on the detected distance, the at least one controllable secondary coupling member of the first selection of the respective module is activated in accordance with the first control mode.

Depending on the detected distance, the primary coupling member of the first module is coupled to the primary coupling member of the second module. Depending on the coupling of the primary coupling members, the at least one secondary coupling member of the first selection of the respective module is deactivated.

According to another aspect, the invention is characterized by a method for decoupling two coupled modules, wherein each module has a coupling device according to the first aspect. Here, the primary coupling member of the first module is decoupled from the primary coupling member of the second module. Depending on the decoupling of the primary coupling members, the at least one secondary coupling member of the first selection of the respective module is activated in accordance with the second control mode. A distance of the two modules relative to each other is detected and, depending on the detected distance, the control mode of the at least one secondary coupling member of the first selection of the respective module is deactivated.

A reliable coupling and/or decoupling of two modules is possible by means of the two methods described above. Here, the respective module is configured, for example, as an aircraft such as a drone, so that a coupling and/or decoupling takes place among aircraft. Also, one of the modules may be configured as a stationary unit, and the other as an aircraft. Also, one module may be configured as a land vehicle. Thus, the coupling and/or decoupling also covers all possible constellations of the module designs.

### Brief description of the drawings

The aspects described above and further aspects, features and advantages of the invention may also be gathered from the examples of the embodiments, which will be described below with reference to the attached drawings.
- Fig. 1: Schematic illustration of a coupling device,
- Fig. 2: Coupling of two modules,
- Fig. 3: Two modules in a coupled state,
- Fig. 4: Examples for a secondary coupling member,
- Fig. 5, 6: Methods for coupling and decoupling modules.

### Detailed Description of Embodiments

Identical reference numerals are used in the Figures for identical or at least similar elements, components or aspects. It is noted that embodiments are described in detail hereinbelow which are merely illustrative and non-limiting.

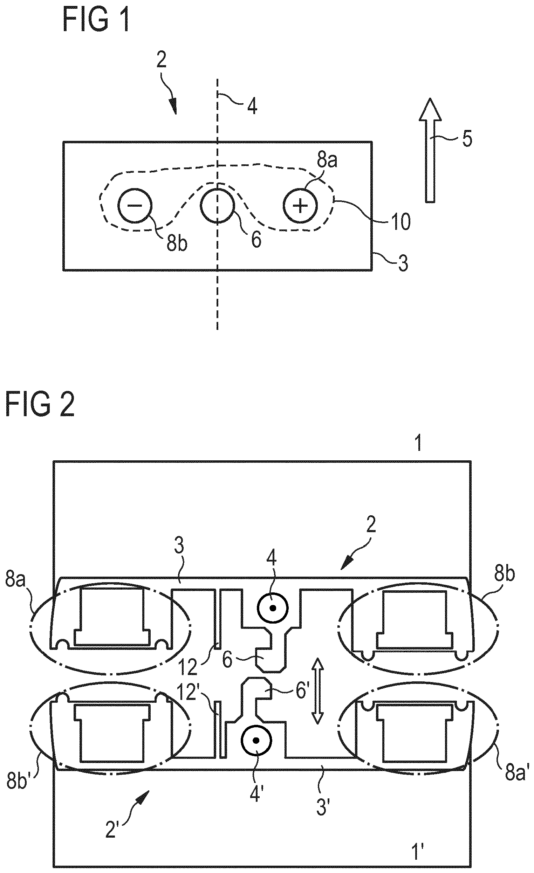

Fig. 1 shows a schematic illustration of a coupling device 2. It may be a part of a module (not shown in Fig. 1) for coupling to other modules therewith. A module may be configured, for example, as an aircraft such as a drone.

The coupling device 2 comprises a coupling surface 3 on which a primary coupling member 6 is disposed. The primary coupling member 6 is configured so as to be genderless or androgynous. This means that such a coupling member can be coupled to an identically configured coupling member without its coupling profile having to be altered.

A coupling axis 4 extends through the primary coupling member 6. The former is configured to be parallel to an applicate axis 5 that is independent of a vehicle or module. The applicate axis 5 is orientated parallel to a direction of action of earth's gravitational acceleration, and thus not necessarily parallel to a vehicle- or module-bound vertical or yaw axis.

The coupling device 2 further comprises several secondary coupling members 8a, 8b that are also disposed on the coupling surface 3. A first and a second secondary coupling member 8a, 8b is respectively positioned on the coupling surface 3 at a predetermined distance from the coupling axis 4. The first and second secondary coupling members 8a, 8b are configured so as to be complementary to each other. Thus, the first secondary coupling member 8a comprises a coupling profile, for example, which would engage a coupling profile of the second secondary coupling member 8b in such a manner that a mechanical coupling would be formed between the two members. In this context, the first and second coupling members 8a, 8b thus form a complementary coupling pair 10.

Fig. 2 schematically shows a first module 1a and a second module 1b with the respectively assigned coupling devices 2, 2' in a non-coupled state. The coupling devices 2, 2' are each shown in a top view.

The respective module 1, 1' includes a coupling surface 3, 3', on which the primary coupling member 6, 6' and two secondary coupling members 8a, 8b, 8a', 8b' are arranged. The primary coupling member 6 of the first module 1 is configured to be identical to the primary coupling member 6' of the second module 1. Thus, the respective primary coupling member 6, 6' is configured in an androgynous manner.

A coupling axis 4, 4' extends through the respective primary coupling member 6, 6', which extends parallel to an applicate axis that is independent of a vehicle or module.

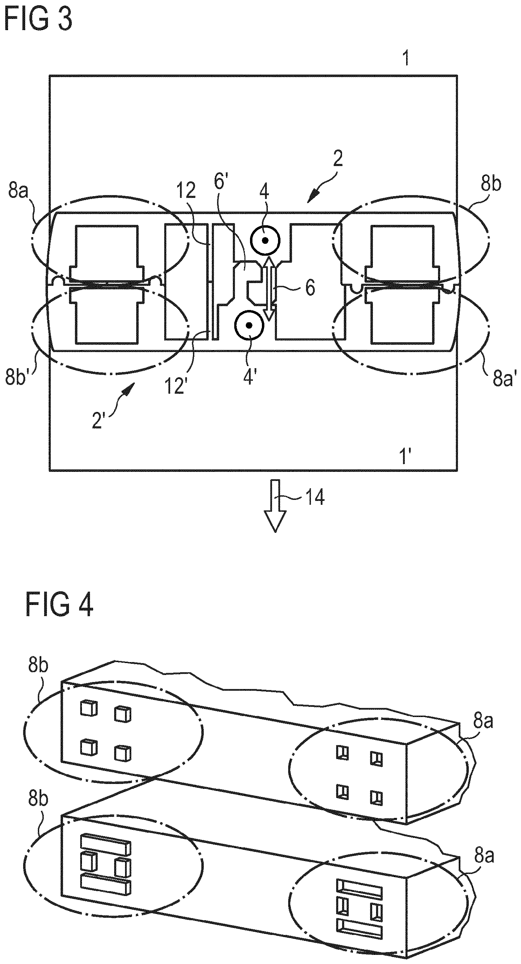

Each module 1, 1' further comprises a secondary coupling pair 10 comprising a first secondary coupling member 8a, 8a' and a second secondary coupling member 8b, 8b'. The respective first secondary coupling member 8a, 8a' is formed so as to be complementary to the assigned second secondary coupling member 8b, 8b'. Thus, the first secondary coupling member 8a, 8a' is configured as a mandrel, for example, such as an annular mandrel, and the second secondary coupling member 8b, 8b', which is configured to be complementary thereto, is configured as a matching bushing, e.g. an annular bushing. For example, Fig. 4 shows two different mandrel arrangements and the matching bushing arrangement as secondary coupling members 8a, 8b (the primary coupling member is not shown here).

Preferably, the respective first secondary coupling member 8a, 8a' includes an electromagnet (not shown), which is designed to be attractive in a first control and repulsive in a second control. The respective second secondary coupling member 8b, 8b' member is preferably configured to be passive and includes a permanent magnet (not shown), for example.

If two coupling devices 2, 2' oppose each other, as shown in Fig. 2, and if the respective first secondary coupling member 8a, 8a' is electrically connected in accordance with the first control, it acts in a magnetically attractive manner on the permanent magnet of the opposite second secondary coupling member 8b, 8b'. The two modules 1, 1' attract each other.

If the respective first secondary coupling member 8a, 8a' is electrically connected in accordance with the second control, it acts in a magnetically repulsive manner on the permanent magnet of the opposite second secondary coupling member 8b, 8b'. The two modules 1, 1' repel each other.

If the electromagnet of the respective first secondary coupling member 8a, 8a' is deactivated, it acts neither in an attractive nor repulsive manner on the opposite second secondary coupling member 8b, 8b'.

Alternatively, the second secondary coupling member 8b, 8b' may respectively have an electromagnet, and the first secondary coupling member 8a, 8a' may respectively have the permanent magnet. In principle, it is also possible that both the first and the second secondary coupling member 8a, 8a', 8b, 8b' have a controllable electromagnet.

An exact parallel alignment of the two modules 1, 1' to be coupled relative to each other (as shown in Fig. 2) prior to coupling is not absolutely necessary.

Fig. 3 shows the first and second module 1, 1' in a coupled state. In this state, both the primary and the secondary coupling members engage the assigned opposite coupling members, so that the two modules 1, 1' are reliably coupled with each other. Here, the electromagnet of the respective first secondary coupling member 8a, 8a' is deactivated. An adherence of the two modules 1, 1' to each other is ensured only by the primary coupling members 6, 6' in this state. Here, the primary coupling members 6, 6' preferably absorb forces in the longitudinal direction, and the secondary coupling members 8a, 8a', 8b, 8b' in the transverse direction, relative to a common direction 14 of movement.

In addition to the primary and secondary coupling members, other components may also be disposed on the coupling surface 3, 3'. For example, one proximity or distance sensor 12, 12' may respectively be arranged there, which detects a distance to a module to be coupled and makes it available to a corresponding control or regulating unit of the module. Depending on the distance value detected by the proximity or distance sensor 12, 12', the electromagnets in the first secondary coupling members 8a, 8a', for example, may be activated or deactivated in accordance with the first or the second control.

Furthermore, data and/or supply interfaces may also be provided, which enable a data and/or power exchange between the modules in the coupled state.

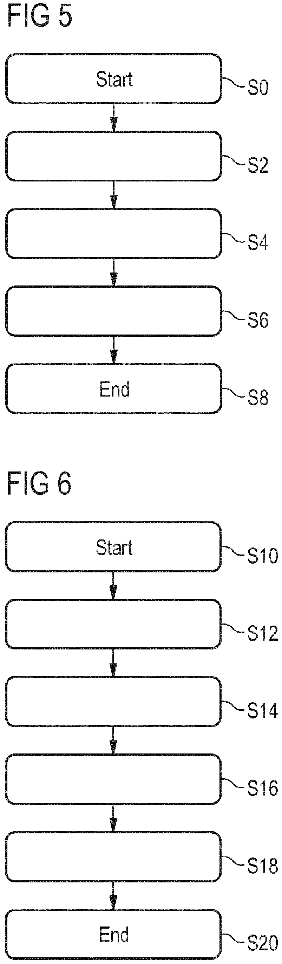

Fig. 5 shows a process sequence for coupling two modules 1, 1' with each other. The modules 1, 1' to be coupled each comprise a coupling device 2, 2'. The method may be executed by a control and regulating unit of the respective module 1, 1', for example.

The method is started in a step S0. In a step S2, a distance to a module to be coupled is detected by means of a proximity or distance sensor 12, 12'. Depending on the detected distance, the first secondary coupling member is activated in accordance with the first control in a step S4. Here, the electromagnet of the first secondary coupling member 8a, 8a' is electrically controlled in such a way that the latter acts in an attractive manner on the module to be coupled. For example, the electromagnets may be activated in accordance with the first control if the distance of the two modules 1, 1' from each other is less than 20 mm.

If the modules 1, 1' to be coupled are each configured as aircraft, and if the two modules are to be coupled during flight, then an at least rough alignment of the two modules 1, 1' relative to each other in a total of 6 degrees of freedom must take place prior to the actual coupling. The activated electromagnets may provide support in this required alignment.

In a step S4, the distance between the first and second modules 1, 1' is detected. If this distance is at minimum or ideally equal to zero, the opposite secondary coupling members 8a, 8b, 8a', 8b' are already coupled to each other in such a way that transverse forces can already be absorbed in this state. If the distance is at minimum or equal to zero, the two modules 1, 1' are coupled to each other with the respective primary coupling members 6, 6'. Thus, forces in the longitudinal direction may then also be absorbed, so that the two modules 1, 1' are reliably mechanically coupled to each other already in this step.

In addition, the coupling of data and supply interfaces may take place in this step S4, parallel or subsequent to the mechanical coupling, so that the two modules 1, 1' are able to exchange data and electrical power, for example.

In a step S6, with the mechanical coupling having been completed by means of the primary coupling members 6, 6', the deactivation of the control of the electromagnets of the secondary coupling members 8a, 8a' may also take place.

In a step S8, the method for coupling two modules 1, 1' can then be terminated.

Fig. 6 shows a process sequence for decoupling two modules 1, 1' from each other. The modules 1, 1' to be decoupled each comprise a coupling device 2, 2'. Like the coupling method, the method may also be executed by the control and regulating unit of the respective module 1, 1'.

The decoupling method is started in a step S10.

In a step S12, the primary coupling member 6 of the first module 1 is decoupled from the primary coupling member 6' of the second module 1'. In this step, the two modules 1, 1' are still in contact with each other. In this context, decoupling the primary coupling member 6, 6' primarily means that the primary coupling members 6, 6' are no longer able to absorb forces in the longitudinal direction. Depending on the design of the primary coupling members 6, 6', however, in addition to the secondary coupling members 8a, 8a', 8b, 8b', they are still able to absorb forces in the transverse direction.

If the primary coupling members 6, 6' are decoupled, the electromagnets of the secondary coupling members are activated in accordance with the second control in a step S14. According to the second control of the electromagnets, opposite secondary coupling members of the modules 1, 1' to be decoupled repel each other. A sufficient distance between the two modules can thus be obtained as quickly as possible, so that a mutual endangerment of the modules due to their continued movement is reduced as far as possible.

With the activation of the electromagnets of the secondary coupling members in accordance with the second control, a distance of the module 1, 1' relative to each other is detected, preferably continuously detected, in a step S16.

Then, in a step S18, the control of the electromagnets of the secondary coupling members is deactivated depending on the detected distance, so that no further repulsion occurs. Preferably, the required distance at which the deactivation starts to take place is selected such that a repulsive effect of the opposing magnets is substantially no longer provided. This distance, from which the repulsion substantially no longer has any effect, may be 3 cm, for example, in the case of drones. From this step on, the decoupling of the modules 1, 1' is completed, and the method may be terminated in a step S20.

While the invention was illustrated and described in detail in the drawings and the preceding description, such illustrations and descriptions are intended to be illustrative or exemplary only, and not restrictive, so that the invention is not limited by the embodiments disclosed. In the claims, the word "having" does not exclude other elements, and the indefinite article "a" does not exclude a plurality. The reference numerals in the claims are not to limit the scope of the claims.

### List of Reference Numerals

- 1, 1': Module
- 2, 2': Coupling device
- 3, 3': Coupling surface
- 4, 4': Coupling axis
- 5: Applicate axis
- 6, 6': Primary coupling member
- 8a, 8a', 8b, 8b': Secondary coupling member
- 10: Coupling pair
- 12: Proximity/distance sensor
- 14: Direction of movement
- S0-S8, S10-: Process steps
S20

## Claims

1. A coupling device (2, 2') for coupling modules (1, 1') with each other, comprising:
- a coupling surface (3),
- a primary coupling member (6, 6') disposed on the coupling surface (3), wherein a coupling axis (4, 4') disposed parallel to the coupling surface and, in use, parallel to a direction of action of earth's gravitational acceleration extends through the primary coupling member (6, 6'),
- at least two secondary coupling members (8a, 8a', 8b, 8b'), which are disposed on the coupling surface (3) and respectively have a predetermined distance from the coupling axis (4a, 4b),
wherein
- the primary coupling member (6, 6') is configured in an androgynous manner,
- the two secondary coupling members (8a, 8a', 8b, 8b') form a secondary complementary coupling pair (10), in which a first secondary coupling member (8a, 8a') is formed to be complementary to a second secondary coupling member (8b, 8b') of another coupling module, for coupling of two modules (1, 1') respectively comprising the coupling device (2, 2'), and
- a first selection of the secondary coupling members (8a, 8a') is disposed on one side of the coupling axis (4, 4') and a second selection of the secondary coupling members (8b, 8b') is disposed on the other side of the coupling axis (4, 4'), and
- at least one of the coupling members (8a, 8a') is configured to attract, in a first control mode, another secondary coupling member (8a', 8b') formed so as to be complementary thereto, or to repel it in a second control mode.

2. The coupling device (2, 2') according to claim 1, wherein at least one secondary coupling member (8a, 8a') of the first selection comprises at least one electromagnet.

3. The coupling device (2, 2') according to claim 1 or 2, wherein at least one secondary coupling member (8b, 8b') of the second selection comprises at least one permanent magnet.

4. The coupling device (2, 2') according to any one of the preceding claims, wherein the primary coupling member (6, 6') is configured to substantially absorb forces in a first direction of action, and the secondary coupling members (8a, 8a', 8b, 8b') are configured to absorb forces in a second direction of action.

5. The coupling device (2, 2') according to any one of the preceding claims, wherein the coupling axis (4, 4') is offset from a center plane of the coupling surface (3, 3').

6. A coupling arrangement for coupling modules (1, 1') with each other, wherein the coupling arrangement comprises a plurality of coupling devices (2, 2') according to any one of the preceding claims, wherein, when the coupling devices (2, 2') are coupled to each other, their respective primary and secondary coupling members (6, 6', 8a, 8a', 8b, 8b') are in engagement with each other so as to prevent decoupling.

7. The coupling arrangement according to claim 6, wherein the coupling devices (2, 2') are configured such that, when the coupling devices (2, 2') are coupled to each other, a first coupling axis (4) of a first coupling device (2) and a second coupling axis (4') of a second coupling device (2') are offset along a direction which is parallel to the coupling surface (3, 3') and is orthogonal to the respective coupling axis (4, 4').

8. An aircraft comprising at least one coupling device according to any one of the preceding claims.

9. A method for coupling two modules (1, 1') with each other, wherein each module (1, 1') has a coupling device (2, 2') according to any one of the preceding claims, in which
- a distance of the two modules (1, 1') relative to each other is detected,
- depending on the detected distance, the at least one controllable secondary coupling member (8a, 8a') of the first selection of the respective module (1, 1') is activated in accordance with the first control mode,
- depending on the detected distance, the primary coupling member (6) of the first module (1) is coupled to the primary coupling member (6') of the second module (1'),
- depending on the coupling of the primary coupling members (6, 6'), the at least one secondary coupling member (8a, 8a') of the first selection of the respective module (1, 1') is deactivated.

10. A method for decoupling two modules (1, 1') from each other, wherein each module (1, 1') has a coupling device (2, 2') according to any one of the preceding claims, in which
- the primary coupling member (6) of the first module (1) is decoupled from the primary coupling member (6') of a second module (1'),
- depending on the decoupling of the primary coupling members (6, 6'), the at least one secondary coupling member (8a, 8a') of the first selection of the respective module (1, 1') is activated in accordance with the second control mode,
- a distance of the two modules (1, 1') relative to each other is detected,
- depending on the detected distance, the control mode of the at least one secondary coupling member (8a, 8a') of the first selection of the respective module (1, 1') is deactivated.

## Patentansprüche

1. Koppelvorrichtung (2, 2'), um Module (1, 1') aneinanderzukoppeln, umfassend:
- eine Koppelfläche (3),
- ein primäres Koppelglied (6, 6'), das auf der Koppelfläche (3) angeordnet ist, wobei eine Koppelachse (4, 4'), die parallel zu der Koppelfläche und im Gebrauch parallel zu einer Wirkungsrichtung der Gravitationsbeschleunigung der Erde angeordnet ist, durch das primäre Koppelglied (6, 6') verläuft,
- mindestens zwei sekundäre Koppelglieder (8a, 8a', 8b, 8b'), die auf der Koppelfläche (3) angeordnet sind und jeweils einen vorbestimmten Abstand von der Koppelachse (4a, 4b) haben,
wobei
- das primäre Koppelglied (6, 6) androgyn ausgestaltet ist,
- die beiden sekundären Koppelglieder (8a, 8a', 8b, 8b') ein sekundäres komplementäres Koppelpaar (10) bilden, bei dem ein erstes sekundäres Koppelglied (8a, 8a') so ausgebildet ist, dass es zu einem zweiten sekundären Koppelglied (8b, 8b') eines anderen Koppelmoduls komplementär ist, um zwei Module (1, 1'), die jeweils die Koppelvorrichtung (2,2') umfassen, zu koppeln, und
- eine erste Auswahl der sekundären Koppelglieder (8a, 8a') an einer Seite der Koppelachse (4, 4') angeordnet ist und eine zweite Auswahl der sekundären Koppelglieder (8b, 8b') an der anderen Seite der Koppelachse (4, 4') angeordnet ist, und
- mindestens eines der sekundären Koppelglieder (8a, 8a') so ausgestaltet ist, dass es in einem ersten Steuermodus ein weiteres sekundäres Koppelglied (8a', 8b') anzieht, das zu diesem komplementär ausgebildet ist, oder es in einem zweiten Steuermodus abstößt.

2. Koppelvorrichtung (2, 2') nach Anspruch 1, wobei mindestens ein sekundäres Koppelglied (8a, 8a') der ersten Auswahl mindestens einen Elektromagneten umfasst.

3. Koppelvorrichtung (2, 2') nach Anspruch 1 oder 2, wobei mindestens ein sekundäres Koppelglied (8b, 8b') der zweiten Auswahl mindestens einen Permanentmagneten umfasst.

4. Koppelvorrichtung (2, 2') nach einem der vorhergehenden Ansprüche, wobei das primäre Koppelglied (6, 6') so ausgestaltet ist, dass es Kräfte in einer ersten Wirkrichtung im Wesentlichen absorbiert, und die sekundären Koppelglieder (8a, 8a', 8b, 8b') so ausgestaltet sind, dass sie Kräfte in einer zweiten Wirkrichtung absorbieren.

5. Koppelvorrichtung (2, 2') nach einem der vorhergehenden Ansprüche, wobei die Koppelachse (4, 4') von einer Mittelebene der Koppelfläche (3, 3') versetzt ist.

6. Koppelanordnung, um Module (1, 1') aneinanderzukoppeln, wobei die Koppelanordnung eine Vielzahl von Koppelvorrichtungen (2, 2') nach einem der vorhergehenden Ansprüche umfasst, wobei, wenn die Koppelvorrichtungen (2, 2') aneinandergekoppelt sind, ihre jeweiligen primären und sekundären Koppelglieder (6, 6', 8a, 8a', 8b, 8b') miteinander in Eingriff stehen, um eine Entkopplung zu verhindern.

7. Koppelanordnung nach Anspruch 6, wobei die Koppelvorrichtungen (2, 2') so ausgestaltet sind, dass, wenn die Koppelvorrichtungen (2, 2') aneinandergekoppelt sind, eine erste Koppelachse (4) einer ersten Koppelvorrichtung (2) und eine zweite Koppelachse (4') einer zweiten Koppelvorrichtung (2') entlang einer Richtung versetzt sind, die parallel zu der Koppelfläche (3, 3') und orthogonal zu der jeweiligen Koppelachse (4, 4') verläuft.

8. Luftfahrzeug, umfassend mindestens eine Koppelvorrichtung nach einem der vorhergehenden Ansprüche.

9. Verfahren, um zwei Modulen (1, 1') aneinanderzukoppeln, wobei jedes Modul (1, 1') eine Koppelvorrichtung (2, 2') nach einem der vorhergehenden Ansprüche aufweist, wobei
- ein Abstand der beiden Module (1, 1') voneinander erfasst wird,
- je nach dem erfassten Abstand das mindestens eine steuerbare sekundäre Koppelglied (8a, 8a') der ersten Auswahl des jeweiligen Moduls (1, 1') entsprechend dem ersten Steuermodus aktiviert wird,
- je nach dem erfassten Abstand das primäre Koppelglied (6) des ersten Moduls (1) an das primäre Koppelglied (6') des zweiten Moduls (1') gekoppelt wird,
- abhängig von der Kopplung der primären Koppelglieder (6, 6') das mindestens eine sekundäre Koppelglied (8a, 8a') der ersten Auswahl des jeweiligen Moduls (1, 1') deaktiviert wird.

10. Verfahren, um zwei Module (1, 1') voneinander zu entkoppeln, wobei jedes Modul (1, 1') eine Koppelvorrichtung (2, 2') nach einem der vorhergehenden Ansprüche aufweist, wobei
- das primäre Koppelglied (6) des ersten Moduls (1) von dem primären Koppelglied (6') des zweiten Moduls (1') entkoppelt wird,
- abhängig von der Entkopplung der primären Koppelglieder (6, 6') das mindestens eine sekundäre Koppelglied (8a, 8a') der ersten Auswahl des jeweiligen Moduls (1, 1') gemäß dem zweiten Steuermodus aktiviert wird,
- ein Abstand der beiden Module (1, 1') voneinander erfasst wird,
- abhängig von dem erfassten Abstand der Steuermodus des mindestens einen sekundären Koppelglieds (8a, 8a') der ersten Auswahl des jeweiligen Moduls (1, 1') deaktiviert wird.

## Revendications

1. Dispositif de couplage (2, 2') pour coupler des modules (1, 1') entre eux, comprenant :
- une surface de couplage (3),
- un élément de couplage primaire (6, 6') disposé sur la surface de couplage (3), un axe de couplage (4, 4') disposé parallèlement à la surface de couplage et, en utilisation, parallèlement à une direction d'action de l'accélération gravitationnelle terrestre s'étendant à travers l'élément de couplage primaire (6, 6'),
- au moins deux éléments de couplage secondaires (8a, 8a', 8b, 8b'), qui sont disposés sur la surface de couplage (3) et ont respectivement une distance prédéterminée de l'axe de couplage (4a, 4b),
dans lequel
- l'élément de couplage primaire (6, 6') est configuré d'une manière androgyne,
- les deux éléments de couplage secondaires (8a, 8a', 8b, 8b') formant une paire de couplage secondaire complémentaire (10), dans laquelle un premier élément de couplage secondaire (8a, 8a') est formé pour être complémentaire à un second élément de couplage secondaire (8b, 8b') d'un autre module de couplage, pour le couplage de deux modules (1, 1') comprenant respectivement le dispositif de couplage (2, 2'), et
- une première sélection des éléments de couplage secondaires (8a, 8a') étant disposée d'un côté de l'axe de couplage (4, 4') et une seconde sélection des éléments de couplage secondaires (8b, 8b') étant disposée de l'autre côté de l'axe de couplage (4, 4'), et
- au moins l'un des éléments de couplage secondaires (8a, 8a') étant configuré pour attirer, dans un premier mode de commande, un autre élément de couplage secondaire (8a', 8b') formé de manière à lui être complémentaire, ou pour le repousser dans un second mode de commande.

2. Dispositif de couplage (2, 2') selon la revendication 1, au moins un élément de couplage secondaire (8a, 8a') de la première sélection comprenant au moins un électroaimant.

3. Dispositif de couplage (2, 2') selon la revendication 1 ou 2, au moins un élément de couplage secondaire (8b, 8b') de la seconde sélection comprenant au moins un aimant permanent.

4. Dispositif de couplage (2, 2') selon l'une quelconque des revendications précédentes, l'élément de couplage primaire (6, 6') étant configuré pour absorber substantiellement des forces dans une première direction d'action, et les éléments de couplage secondaires (8a, 8a', 8b, 8b') étant configurés pour absorber des forces dans une seconde direction d'action.

5. Dispositif de couplage (2, 2') selon l'une quelconque des revendications précédentes, l'axe de couplage (4, 4') étant décalé par rapport à un plan central de la surface de couplage (3, 3').

6. Agencement de couplage pour coupler des modules (1, 1') entre eux, l'agencement de couplage comprenant une pluralité de dispositifs de couplage (2, 2') selon l'une quelconque des revendications précédentes, lorsque les dispositifs de couplage (2, 2') sont couplés entre eux, leurs éléments de couplage primaires et secondaires respectifs (6, 6', 8a, 8a', 8b, 8b') étant en prise les uns avec les autres de manière à empêcher le découplage.

7. Agencement de couplage selon la revendication 6, les dispositifs de couplage (2, 2') étant configurés de telle sorte que, lorsque les dispositifs de couplage (2, 2') sont couplés entre eux, un premier axe de couplage (4) d'un premier dispositif de couplage (2) et un second axe de couplage (4') d'un second dispositif de couplage (2') sont décalés le long d'une direction qui est parallèle à la surface de couplage (3, 3') et est orthogonale à l'axe de couplage respectif (4, 4').

8. Aéronef comprenant au moins un dispositif de couplage selon l'une quelconque des revendications précédentes.

9. Procédé pour coupler deux modules (1, 1') l'un à l'autre, chaque module (1, 1') ayant un dispositif de couplage (2, 2') selon l'une quelconque des revendications précédentes,
- une distance des deux modules (1, 1') l'un par rapport à l'autre étant détectée,
- en fonction de la distance détectée, l'au moins un élément de couplage secondaire contrôlable (8a, 8a') de la première sélection du module respectif (1, 1') étant activé conformément au premier mode de commande,
- en fonction de la distance détectée, l'élément de couplage primaire (6) du premier module (1) étant couplé à l'élément de couplage primaire (6') du second module (1'),
- en fonction du couplage des éléments de couplage primaires (6, 6'), l'au moins un élément de couplage secondaire (8a, 8a') de la première sélection du module respectif (1, 1') étant désactivé.

10. Procédé pour découpler deux modules (1, 1') l'un de l'autre, chaque module (1, 1') ayant un dispositif de couplage (2, 2') selon l'une quelconque des revendications précédentes,
- l'élément de couplage primaire (6) du premier module (1) étant découplé de l'élément de couplage primaire (6') d'un second module (1'),
- en fonction du découplage des éléments de couplage primaires (6, 6'), l'au moins un élément de couplage secondaire (8a, 8a') de la première sélection du module respectif (1, 1') étant activé conformément au second mode de commande,
- une distance des deux modules (1, 1') l'un par rapport à l'autre étant détectée,
- en fonction de la distance détectée, le mode de commande de l'au moins un élément de couplage secondaire (8a, 8a') de la première sélection du module respectif (1, 1') étant désactivé.
